# EUROPÄISCHE PATENTANMELDUNG

(11) **EP 0 748 854 A2**
(43) Veröffentlichungstag der Anmeldung: **18.12.1996**
(21) Anmeldenummer: 96108417.5
(22) Anmeldetag: 28.05.1996
(51) Int. Cl.: C09D 11/10, C09D 17/00, C08G 8/28

(54) **Modifizierte Naturharzsäureester, Verfahren zu ihrer Herstellung und ihre Verwendung als Bindemittelharze in Druckfarben**

(30) Priorität: 03.06.1995 DE 19520530
(71) Anmelder: Vianova Resins GmbH, 55252 Mainz-Kastel (DE)
(72) Erfinder: Berder, Albert, Dr., 55130 Mainz (DE)

(57) **Zusammenfassung**

Toluol-lösliche modifizierte Naturharzsäureester, herstellbar durch Umsetzung von mindestens jeweils einer Verbindung aus den Substanzgruppen
A) Naturharze oder Naturharzsäuren,
B) α,β-ethylenisch ungesättigte Carbonsäuren oder deren Anhydride,
C) Phenole, die gegenüber Oxoverbindungen mehrfachfunktionell sind,
D) Aldehyde oder Aldehydacetale,
E) Alkohole mit mindestens zwei Hydroxylgruppen
sowie gegebenenfalls von weiteren Verbindungen aus den Substanzgruppen
F) Fettsäuren oder Fettsäureester,
G) ethylenisch ungesättigte Monomere,
H) ethylenisch ungesättigte Kohlenwasserstoffharze
in Gegenwart von
I) einwertigen oder zweiwertigen Metallverbindungen oder Gemischen davon bei einer Temperatur von 100 bis 300 °C unter Wasserabspaltung bis zu einer Säurezahl kleiner 100 mg KOH/ g Harz und anschließende Umsetzung der gebildeten Produkte mit
J) Carbonsäuren, die wenigstens zwei Carboxylgruppen enthalten und nicht α,β-ethylenisch ungesättigt sind, oder deren Anhydriden im Temperaturbereich von 200 bis 300 °C,
eignen sich als Bindemittelharze für den Illustrationstiefdruck.

## Beschreibung

Die Erfindung betrifft modifizierte Naturharzsäureester sowie Verfahren zu deren Herstellung durch Umsetzung von Naturharzen mit α,β-ungesättigten Carbonsäuren oder deren Anhydriden, Phenolen, Aldehyden, Kondensationskatalysatoren, Veresterungs- und Modifizierungsmitteln und anschließender Vernetzungsreaktion mit Carbonsäuren, die mindestens zwei Säuregruppen enthalten, oder auch deren Anhydriden. Die neuen Verbindungen können vorteilhaft als Bindemittelharze für Druckfarben für den Illustrationstiefdruck verwendet werden.

Im Illustrationstiefdruck werden überwiegend Toluol enthaltende Druckfarben eingesetzt. Derartige Druckfarben können bekanntlich durch Pigmentieren eines Firnisses hergestellt werden, der durch Auflösen geeigneter Bindemittelharze in Toluol unter Zusatz üblicher Hilfsstoffe gewonnen wird. Das Bindemittelharz hat dabei die Aufgabe, das Pigment auf dem Bedruckstoff zu verankern.

Im allgemeinen werden zur technischen Herstellung von Toluol enthaltenden Druckfarben zunächst Pigmentanreibungen oder Pigmentkonzentrate synthetisiert, die dann nach Verdünnen mit Toluol oder durch Auflacken mit weiteren Bindemittelsystemen die druckfertigen Farben ergeben. Bei der Herstellung dieser Zwischenstufen ist es besonders wichtig, dem Pigment in der Dispergierphase ausreichend viel Harz zur optimalen Benetzung zur Verfügung zu stellen, ohne jedoch eine zu hohe Viskosität zu erreichen. Ein Überschreiten der optimalen Viskosität kann die erwünschte Fließfähigkeit der Anreibung nachteilig beeinträchtigen oder sogar zu Inhomogenitäten führen. Andererseits bedingt eine Erniedrigung der Viskosität durch zu starkes Herabsetzen der Konzentration des Harzes eine unbefriedigende Dispergierwirkung. Natürlich ist es jedoch erwünscht, aus Kostengründen eine möglichst harzarme Druckfarbe herzustellen, die dennoch über ausreichende drucktechnische Eigenschaften verfügt. Aus wirtschaftlichen Gründen ist es demzufolge ganz besonders interessant, Druckfarben so herzustellen, daß sie bei möglichst niedrigem Gehalt an Bindemittelharzen eine trotzdem noch gute Verdruckbarkeit und drucktechnische Leistungsfähigkeit besitzen.

Als Bindemittel für Druckfarben werden modifizierte Naturharzsäureester eingesetzt. Die Herstellung modifizierter Naturharzsäureester aus Naturharzen, die auch teilweise mit α,β-olefinisch ungesättigten Carbonsäuren oder deren Anhydriden modifiziert sein können, Phenol-Aldehyd-Kondensationsprodukten, Veresterungs- und weiteren Modifizierungsmitteln wie Fettsäuren oder Kohlenwasserstoffharzen sowie ihre Verwendung als Bindemittelharze für Druckfarben ist bekannt. Zur Herstellung dieser Phenolharz-modifizierten Naturharzsäureester werden üblicherweise Salze zweiwertiger oder auch einwertiger Metalle als Katalysator benötigt.

EP-A 0 548 506 beschreibt die Herstellung öllöslicher Phenolharz-modifizierter Naturharzsäureester durch Modifizierung von Naturharzsäuren, die vor der eigentlichen Modifizierungsreaktion teilweise mit α,β-olefinisch ungesättigten Säuren oder deren Anhydriden, beispielsweise Maleinsäureanhydrid, umgesetzt sind, in Gegenwart von Magnesiumverbindungen. Diese Bindemittelharze sind in Farben für den Offsetdruck geeignet, in Toluol enthaltenden Illustrationstiefdruckfarben jedoch nicht verwendbar.

Weiterhin werden in der EP-A 0 615 987 Calcium- oder Zink-verbindungen als Katalysatoren für die Modifizierung von Naturharzen mit Phenolen, Aldehyden und Polyolen vorgeschlagen. Die Harze werden ohne die Mitverwendung von α,β-olefinisch ungesättigten Carbonsäuren oder deren Anhydriden aufgebaut. Derartige Systeme sind für den Tiefdruck mit Toluol zwar geeignet, weisen in Toluol jedoch einen so steilen Verlauf der Viskosität mit der Konzentration auf, daß sie für eine Verwendung in Pigmentanreibungen und -konzentraten nur beschränkt verwendbar sind.

Ein vergleichbares Verhalten zeigen die in US-A 3 880 788 beschriebenen Produkte und die in Gegenwart zweiwertiger Metallverbindungen hergestellt werden aus styrolisiertem Kolophonium, das gegebenenfalls auch vor der eigentlichen Modifizierungsreaktion mit Phenolharzen und Veresterungsmittel zusätzlich teilweise mit Maleinsäureanhydrid umgesetzt ist.

Aus US-A 4 207 219 sind Bindemittelharze für Tiefdruckfarben bekannt, die hergestellt werden aus Naturharzsäuren, die mit α,β-olefinisch ungesättigten Dicarbonsäuren, beispielsweise Maleinsäureanhydrid modifiziert sind, Calciumverbindungen, Polyalkoholen und Resolen. Die Produkte sind jedoch relativ niederviskos und ergeben deshalb unvorteilhafte, harzreiche Farben.

US-A 4 857 624 beschreibt die Modifizierung von mit Fumarsäure umgesetztem Kolophonium mit Diphenylolpropan, Formaldehyd und Pentaerythrit in Gegenwart von Magnesiumoxid. Die Produkte weisen jedoch den Nachteil auf, daß bei ihrer Herstellung in der Harzschmelze ein unerwünschtes Auskristallisieren auftreten kann. Die dabei entstehenden Produkte sind in Toluol unlöslich und machen das Produkt somit unbrauchbar.

Es ist auch bereits beschrieben, Naturharze oder deren Derivate mit aliphatischen Carbonsäuren oder Säure-modifizierten Alkydharzen, Phenolen und Formaldehyd in Gegenwart saurer Katalysatoren zu erhitzen und anschließend das entstandene Polykondensat mit Metalloxiden oder -hydroxiden ins Resinat zu überführen (Derwent-Abstract Nr. 87-358757/51 (JP-A 260 810/87)). Bekanntlich führt die Verwendung von Resinaten als Bindemittel jedoch zu unerwünscht harzreichen Farben.

In der Patentanmeldung EP-A 0 619 331 werden Alkaliverbindungen als Katalysator für die Umsetzung von Cyclopentadienverbindungen mit Naturharzsäuren, Phenolen und Aldehyden vorgeschlagen. Die erhaltenen unveresterten Cyclopentadienharze sind als Bindemittel für Offsetdruckfarben gut geeignet, nicht jedoch für den Illustrationstiefdruck.

In der EP-Anmeldung Nr. 95101393.7 wurde auch bereits vorgeschlagen, Lithiumverbindungen als Katalysatoren für die Herstellung Phenolharz-modifizierter Naturharzsäureester zu verwenden. Die Naturharzsäuren können dabei vor der eigentlichen Modifizierung teilweise mit α,β-olefinisch ungesättigten Carbonsäuren oder deren Anhydriden umgesetzt werden. Die Harze weisen zwar einen vorteilhaften flachen Verlauf der Viskosität mit der Konzentration auf, jedoch befriedigt der Glanz damit formulierter Farben nicht vollständig.

Ferner ist bekannt, Naturharze mit Phenol und Formaldehyd sowie Glycerin in Gegenwart von Magnesiumoxid und basischen Lithiumverbindungen zu öllöslichen Harzen umzusetzen (Chemical Abstract Nr. 120:324917 und 120:299598 (CN-A 1 077 462 und CN-A 1 077 461)). Diese Bindemittel sind zwar zum Dispergieren von Pigmenten für Offsetdruckfarben, nicht jedoch zum Dispergieren von Pigmenten in Illustrationstiefdruckfarben geeignet.

Es wurde auch bereits vorgeschlagen, Naturharze oder Naturharzsäuren, die nicht mit α,β-ungesättigten Säuren oder Anhydriden modifiziert sind, mit mehrbasischen aliphatischen Säuren oder Phthalsäuren oder deren Anhydriden, Phenolharzen oder ihren Komponenten, und mehrwertigen Alkoholen umzusetzen. Diese Bindemittelharze sind jedoch nur für Offsetdruckfarben zu verwenden (Chemical Abstract Nr. 120:220578 (JP-A 279 613/93)). Gleiches gilt für Bindemittelharze auf Kolophonium- oder Cyclopentadienbasis, die mit Adipinsäure oder Maleinsäureanhydrid modifiziert sind (Chemical Abstract Nr. 108:152315 (JP-A 265 375/87)).

Aus DE-A 36 16 824 ist bekannt, Phenolharz-modifizierte Kolophoniumharze mit Alkydharzen, die mit der mehrbasischen Isophthalsäure aufgebaut sind, zu mischen, und die Gemische in Farben für den Offsetdruck einzusetzen.

Auch ist es bekannt, Phenolharz-modifizierte Kolophoniumharze mit Alkydharzen auf Isophthalsäurebasis bei hohen Temperaturen zu kondensieren. Diese Cokondensate sind jedoch gleichfalls nur für Offsetdruckfarben zu verwenden (Chemical Abstract Nr. 105:44956 (JP-B 059 269/85)).

Schließlich wurden auch bereits Naturharze, die kein Maleinsäureanhydrid enthalten, Phenolharze, mehrwertige Alkohole, (halb)trocknende Öle und mehrbasische Carbonsäuren zu Bindemittelharzen für Offsetdruckfarben umgesetzt (Chemical Abstract Nr. 107:136063 (JP-A 018 484/87)).

Die Entwicklung besonders schnell laufender Druckmaschinen und der Trend, neben gestrichenen Papieren zunehmend auch nichtgestrichene Papiere mit erhöhter Saugfähigkeit zu bedrucken, stellt besonders hohe Anforderungen an die Qualität von Bindemittelharzen für den Illustrationstiefdruck. Insbesondere müssen sie dem Farbfilm einen guten Stand auf dem Bedruckstoff verleihen. Keinesfalls sollen Bindemittelharze zusammen mit Pigment in das Innere diffundieren, da dies mit Glanzverlust und verringerter Scheuerfestigkeit einhergeht. Mit den bekannten Bindemittelharzen können die gestiegenen Anforderungen nicht immer befriedigend erfüllt werden.

Der vorliegenden Erfindung lag somit die Aufgabe zugrunde, neue Bindemittelharze verfügbar zu machen, die in Toluol einen relativ flachen Verlauf der Viskosität mit der Konzentration aufweisen, die über eine gute Pigmentbenetzung verfügen, und die die Herstellung von festkörperarmen Illustrationstiefdruckfarben mit hohem Glanz und mit einem geringen Durchschlagen der Farbe beim Bedrucken ermöglichen.

Die Aufgabe konnte in nicht vorhersehbarer Weise dadurch gelöst werden, daß man bei der Herstellung von Druckfarbenharzen für den Illustrationstiefdruck auf der Basis Phenolharz-modifizierter Naturharzsäureester zunächst Naturharze verwendet, die mit α,β-olefinisch ungesättigten Carbonsäuren oder deren Anhydriden modifiziert sind, dann aber nach der Modifizierungsreaktion mit Phenolharz, Veresterungsmittel und weiteren Modifizierungsmitteln die gebildeten Harzschmelzen zusätzlich durch Zugabe von Carbonsäuren, die mindestens zwei Carboxylgruppen enthalten, oder auch deren Anhydriden, wobei diese jedoch keine α,β-ungesättigten Carbonsäuren oder deren Anhydride darstellen, umsetzt.

Gegenstand der Erfindung sind daher Toluol-lösliche modifizierte Naturharzsäureester, herstellbar durch Umsetzung von mindestens jeweils einer Verbindung aus den Substanzgruppen
A) Naturharze oder Naturharzsäuren,
B) α,β-ethylenisch ungesättigte Carbonsäuren oder deren Anhydride
C) Phenole, die gegenüber Oxoverbindungen mehrfachfunktionell sind,
D) Aldehyde oder Aldehydacetale,
E) Alkohole mit mindestens zwei Hydroxylgruppen
sowie gegebenenfalls von weiteren Verbindungen aus den Substanzgruppen
F) Fettsäuren oder Fettsäureester,
G) ethylenisch ungesättigte Monomere,
H) ethylenisch ungesättigte Kohlenwasserstoffharze,
in Gegenwart von
I) einwertigen oder zweiwertigen Metallverbindungen oder Gemischen davon bei einer Temperatur von 100 bis 300 °C, vorzugsweise 130 bis 280 °C, unter Wasserabspaltung bis zu einer Säurezahl kleiner 100 mg KOH/g Harz und anschließende Umsetzung der gebildeten Produkte mit
J) Carbonsäuren, die mindestens zwei Carboxylgruppen enthalten und nicht α,β-ethylenisch ungesättigt sind, oder deren Anhydriden, im Temperaturbereich von 200 bis 300 °C.

Als Verbindungen der Substanzgruppen A) bis J) finden vorzugsweise Verwendung:
A) Kolophonium, Wurzelharz, Tallharz sowie disproportioniertes oder partiell hydriertes oder dimerisiertes Naturharz beliebiger Provenienz; Naturharze oder Naturharzsäuren, die in untergeordneten Mengen weitere Terpene enthalten,
B) α,β-ethylenisch ungesättigte Carbonsäuren oder deren Anhydride, insbesondere Fumarsäure, Maleinsäure, Maleinsäureanhydrid, Itakonsäure, Zimtsäure, Acrylsäure, Methacrylsäure,
C) einkernige Phenole, insbesondere Phenol, (C₁-C₁₂)-Alkylphenole, Aryl- oder Aralkylphenole, Kresole, 1,3,5-Xylenole, Isopropyl-, p-tert.-Butyl-, Amyl-, Oktyl-, Nonylphenol, Phenylphenol, Cumylphenol, und mehrkernige Phenole, insbesondere Diphenylolpropan, sowie Additionsprodukte aus Phenolen und ethylenisch ungesättigten Monomeren, wie α-Methylstyrol, α-Chlorstyrol, Vinyltoluol, Cyclopentadien,
D) aliphatische (C₁-C₇)-Aldehyde, insbesondere Formaldehyd in seinen verschiedenen monomeren, oligomeren und polymeren Formen, Acetaldehyd, Butyraldehyd, Isobutyraldehyd, ferner Benzaldehyd, Furfurol, Glyoxal,
E) bifunktionelle Alkohole, insbesondere Glykole, trifunktionelle Alkohole, beispielsweise Trimethylolethan, Trimethylolpropan, Glycerin, tetrafunktionelle Alkohole, beispielsweise Pentaerythrit, pentafunktionelle Alkohole, beispielsweise dimerisiertes Trimethylolpropan, hexafunktionelle Alkohole, beispielsweise dimerisiertes Pentaerythrit,
F) tierische, pflanzliche oder durch Raffination gewonnene Fettsäuren, ferner Fettsäureester, insbesondere Fettsäureglycerinester, in Form von vegetabilischen oder tierischen Ölen, beispielsweise Tallöl, Baumwollsaatöl, Sojaöl, Leinöl, Holzöl, Fischöl, Kokosfett,
G) Vinylaromaten, insbesondere Styrol, α-Methylstyrol, Inden,
H) Polymere oder Oligomere aus einfach und/oder mehrfach ethylenisch ungesättigten (C₅-C₉)-Kohlenwasserstoffen, insbesondere aus der Gruppe Isopren, Cyclopentadien, Inden, Cumaron, Styrol, oder Copolymerisate von ethylenisch ungesättigten Kohlenwasserstoffharzen mit Naturharzen oder Naturharzsäuren,
I) Lithium-, Natrium-, Kalium-, Magnesium-, Calcium- oder Zinkverbindungen oder Gemische davon, insbesondere Oxide, Hydroxide, Carbonate, Hydrogencarbonate, Acetate,
J) aliphatische Dicarbonsäuren, beispielsweise Oxalsäure, Bernsteinsäure, mit Alkylgruppen substituierte Bernsteinsäuren, wie Dodecylbernsteinsäure, Anlagerungsprodukte von Maleinsäureanhydrid oder Fumarsäure an Naturharzsäuren des Baumharzes, beispielsweise die Maleopimarsäure, Anlagerungsprodukte von Maleinsäureanhydrid an ungesättigte Fettstoffe, wie z.B. die bekannten Produkte mit 10-Undecensäuremethylester, Malonsäure, Adipinsäure, dimerisierte und trimerisierte Fettsäuren, Weinsäure, Zitronensäure, cyclische Carbonsäuren, wie beispielsweise 5-Norbornen-2,3-dicarbonsäureanhydrid, 1,2,3,6-Tetrahydrophthalsäureanhydrid, aromatische Carbonsäuren, beispielsweise Phthalsäureanhydrid, Terephthalsäure, Isophthalsäure, Trimellithsäure.

Gegenstand der Erfindung ist auch die Herstellung von Toluol-löslichen Phenolharz-modifizierten Naturharzsäureestern durch Umsetzung der Komponenten A) bis J). Vorzugsweise beträgt der Anteil der einzelnen Komponenten, bezogen auf die Gesamtmenge der eingesetzten Komponenten,
30 bis 95 Gew.-%, vorzugsweise 40 bis 90 Gew.-%, insbesondere 50 bis 80 Gew.-%, Naturharze oder Naturharzsäuren aus der Substanzgruppe A),
0,1 bis 20, vorzugsweise 2 bis 10 Gew.-%, α,β-ethylenisch ungesättigte Carbonsäuren oder deren Anhydride aus der Substanzgruppe B),
1 bis 45 Gew.-%, vorzugsweise 5 bis 40 Gew.-%, insbesondere 10 bis 35 Gew.-%, Phenole aus der Substanzgruppe C),
1 bis 20 Gew.-%, vorzugsweise 3 bis 10 Gew.-%, insbesondere 5 bis 8 Gew.-%, Aldehyde oder Aldehydacetale aus der Substanzgruppe D),
bei einem Molverhältnis der Phenolkomponente C) zur Aldehydkomponente D), das vorzugsweise im Bereich von 1:0,9 bis 1:4,5, insbesondere 1:1 bis 1:2,5 liegt,
oder anstelle der Komponenten aus den Substanzgruppen C) und D) oder anteilig mit diesen, vorzugsweise bis zu 65 Gew.-%, aus Verbindungen der Substanzgruppen C) und D) separat hergestellte Kondensationsprodukte, vorzugsweise Phenolresole,
1 bis 20 Gew.-%, vorzugsweise 3 bis 15 Gew.-%, insbesondere 4 bis 10 Gew.-%, Alkohole aus der Substanzgruppe E),
0 bis 40 Gew.-%, vorzugsweise 1 bis 10 Gew.-%, Fettsäuren oder Fettsäureester aus der Substanzgruppe F),
0 bis 30 Gew.-%, vorzugsweise 1 bis 25 Gew.-%, insbesondere 2 bis 10 Gew.-%, ungesättigte Monomere aus der Substanzgruppe G),
0 bis 30 Gew.-%, vorzugsweise 1 bis 25 Gew.-%, insbesondere 2 bis 10 Gew.-%, Kohlenwasserstoffharze aus der Substanzgruppe H),
0,01 bis 5 Gew.-%, vorzugsweise 0,1 bis 2 Gew.-%, insbesondere 0,3 bis 1,5 Gew.-%, berechnet als Oxid, einwertige und/oder zweiwertige Metallverbindungen, aus der Substanzgruppe I),
0,1 bis 20 Gew.-%, vorzugsweise 1 bis 10 Gew.-%, Carbonsäuren aus der Substanzklasse J).

Zur Herstellung werden die in der Naturharzchemie üblichen Apparaturen verwendet. Die erfindungsgemäßen Produkte können dabei nach diskontinuierlichen wie auch kontinuierlichen Verfahren hergestellt werden.

Vorzugsweise wird geschmolzenes Naturharz vorgelegt, das mit der α,β-olefinisch ungesättigten Carbonsäure oder deren Anhydrid modifiziert wird, vorzugsweise im Temperaturbereich von 120 bis 200 °C. Dann werden gegebenenfalls zur Harzmodifizierung Fettsäuren, ethylenisch ungesättigte Monomere oder ethylenisch ungesättigte Kohlenwasserstoffharze oder Gemische davon zugegeben. Es ist jedoch auch möglich, Naturharzsäure und gegebenenfalls die Modifizierungsmittel zusammen vorzulegen, und Maleinsäureanhydrid dann an das Naturharz zu addieren. Dann werden die entsprechende Metallverbindung oder Gemische davon, Polyol, Phenol und Aldehyd eingetragen. Anstelle von Phenol und Aldehyd oder auch anteilig mit diesen kann auch ein separat nach bekannten Methoden aus Phenolen und Aldehyden in Gegenwart basischer Katalysatoren bei einer Temperatur von 50 bis 160 °C, vorzugsweise 60 bis 100 ° C, bei Normaldruck oder erhöhtem Druck hergestelltes Kondensationsprodukt, vorzugsweise Phenolresol, eingesetzt werden. Danach wird die Kondensation vorzugsweise im Temperaturbereich von 130 bis 160 °C eingeleitet. Wird das Resol erst in der Schmelze aus den Komponenten Phenol und Aldehyd in situ hergestellt, wird vorzugsweise unter einem Druck von bis zu 10 bar gearbeitet. Bei ausschließlicher Verwendung eines Resols wird vorzugsweise drucklos gearbeitet. Anschließend wird unter Destillation des Reaktionswassers vorzugsweise auf Temperaturen von 200 bis 280 °C erhitzt. Der Fortgang der Reaktion wird zweckmäßigerweise durch die Bestimmung der Säurezahl verfolgt. So kann die Säurezahl des Harzgemisches anfangs vorzugsweise bis zu 200 mg KOH/g Harz betragen, ermittelt nach den üblichen Methoden. Sie fällt mit fortschreitender Umsetzung unter Wasserabspaltung fortlaufend ab. Sobald die Säurezahl auf Werte unterhalb von 100 mg KOH/g, vorzugsweise 80 mg KOH/g, insbesondere unter 50 mg KOH/g Harz abgesunken ist, wird die Carbonsäure oder dessen Anhydrid der Substanzklasse J) hinzugefügt. Dann wird die Veresterungsreaktion solange unter Destillation von Wasser, die auch unter azeotropen Bedingungen unter Verwendung eines inerten Schleppmittels, beispielswiese Xylol, erfolgen kann, fortgesetzt, bis die erfindungsgemäße Umsetzung das gewünschte Endstadium erreicht hat. Dieses wird dann zweckmäßigerweise durch Bestimmen der Viskositätswerte in einem Lösungsmittel, beispielsweise Toluol, ermittelt. Gegebenenfalls werden flüchtige Anteile, einschließlich des Schleppmittels, durch Destillation, zuletzt unter Vakuum, aus dem Reaktionsprodukt entfernt. Nach Abkühlen der Schmelze kann das Endprodukt in fester Form isoliert werden.

Die erfindungsgemäßen Harze können auch während oder vorzugsweise nach der eigentlichen Reaktion durch Addition weiterer Verbindungen weiterbearbeitet werden. Beispielsweise ist es möglich, die Schmelze mit Lösungsmittel wie Toluol zu verdünnen, und das Harz in Form eines Firnis zu isolieren, wobei alle Übergänge von einem festen zu einem flüssigen Firnis möglich sind. Es ist aber auch möglich, niedermolekulare Verbindungen hinzuzufügen, beispielsweise Kolophonium, Kolophoniumester, oder Polymere, beispielsweise Phenolharze, Polyester, Alkydharze, Acrylharze, weitere Phenolharz-modifizierte Kolophoniumharze, Kohlenwasserstoffharze, und Mischungen davon. Beispielsweise können durch diese Vorgehensweise Lösungsviskositäten optimiert werden.

Da sich Naturharze verschiedener Provenienz hinsichtlich ihrer Zusammensetzung unterscheiden können, beispielsweise können sie eine unterschiedliche Isomerenverteilung der Harzsäuren oder unterschiedliche Mengen weiterer Terpene aufweisen, können bei gleicher Rezeptur auch unterschiedliche Produkteigenschaften, beispielsweise bezüglich der Viskosität, resultieren. Die Rezeptur kann dann jedoch durch geringe Änderung der Komponentenkonzentration dem jeweiligen Naturharz angepaßt werden.

Das Molekulargewicht der erfindungsgemäßen Harze kann durch Gelpermeationschromatographie der Harzlösungen in Tetrahydrofuran (THF) an Polystyrolschaum in einem Permeationsmeßgerät nach bekannten Methoden ermittelt werden. Das mittlere Molekulargewicht (Gewichtsmittel M_{w}) der erfindungsgemäßen Harze liegt gemäß den erhaltenen Meßergebnisssen vorzugsweise bei Werten von M_{w} > 5000 und ist nach oben nicht kritisch begrenzt. Besonders bevorzugt liegt das mittlere Molekulargewicht M_{w} jedoch in einem Bereich von 5.000 und 150.000, insbesondere 10.000 und 120.000.

Zur Bestimmung der Viskositäten werden beispielsweise die 25 Gew.-%igen toluolischen Lösungen mit einem üblichen Rotationsviskosimeter bei 23 °C vermessen. Die Viskositäten liegen vorzugsweise in einem Bereich von 3 bis 100 mPa·s, vorzugsweise von 4 bis 50 mPa·s.

Erfindungsgemäß modifizierte Naturharzsäureester mit einem deutlich höherem Molekulargewicht (über 10000, insbesondere über 12000 g/mol) werden insbesondere bei Entfernung des Reaktionswassers durch Azeotrop- oder Vakuumdestillation erhalten. Die Steigerung des Molekulargewichts ist besonders dann erwünscht, wenn Bindemittelharze hergestellt werden sollen, die in Toluol hohe Viskositäten erreichen. Mit derartigen Bindemitteln formulierte Farben können festkörperarm aufgebaut werden.

Die erfindungsgemäßen Bindemittelharze, die unter Einwirkung von Lithiumverbindungen als Kondensationskatalysatoren hergestellt werden, zeichnen sich vorteilhaft durch einen vergleichsweise besonders flachen Viskositätsverlauf beim Verdünnen in Toluol aus. Ihre Viskosität nimmt also auch bei steigendem Harzgehalt nur wenig zu. Dies macht sie insbesondere auch überlegen gegenüber Bindemittelharzen des Standes der Technik. Durch die Variation der Konzentration der Lithiumionen kann die Viskosität der resultierenden Harze gezielt gesteuert werden.

Andererseits zeigen die Harze, die unter Einwirkung zweiwertiger Metallkationen hergestellt werden, die aus Calcium-, Magnesium- oder Zinkverbindungen stammen, besonders gute Eigenschaften in der Pigmentbenetzung, wobei Farben mit hohem Glanz resultieren. Deshalb ist auch die Verwendung der zweiwertigen Metallverbindungen eine bevorzugte Ausführungsform.

Mitunter können die zur Vernetzung verwendeten mehrwertigen Carbonsäuren der Substanzgruppe J) zu leichten Trübungen im Harz oder dessen toluolischer Lösung führen, was unerwünscht ist. Bei Verwendung von 1,2,3,6-Tetrahydrophthalsäureanhydrid hingegen werden im allgemeinen transparente Harze und Lösungen erhalten. Die Verwendung von 1,2,3,6-Tetrahydrophthalsäureanhydrid ist deshalb besonders bevorzugt.

Weiterer Gegenstand der Erfindung ist die Verwendung der erfindungsgemäßen Harze als Bindemittelharze in Pigmentanreibungen und -konzentraten sowie in Druckfarben vorzugsweise für den Illustrationstiefdruck mit Toluol.

Die erfindungsgemäßen Harze weisen eine ausgezeichnete Verträglichkeit mit anderen Bindemitteln, beispielsweise mit Naturharzsäureestern des Standes der Technik, Resinaten oder Kohlenwasserstoffharzen auf. Sie besitzen darüber hinaus ein ausgezeichnetes Benetzungsverhalten für die im Illustrationstiefdruck verwendeten Pigmente. Die Toluol enthaltenden Tiefdruckfarben werden nach den üblichen Methoden formuliert. Dazu wird das geeignete Bindemittelharz in Toluol gelöst und dieser Firnis pigmentiert oder eine vorab hergestellte Pigmentanreibung mit Toluol verdünnt. Als Zuschlagstoffe können die sonst üblichen, beispielsweise Füllstoffe wie Calciumcarbonat, oder grenzflächenaktive Mittel zur Verbesserung der Pigmentdispersion wie Lecithin, oder Wachse zur Verbesserung der Scheuerfestigkeit, mitverwendet werden.

Die Erfindung wird durch die nachfolgenden Beispiele näher erläutert, ohne sie jedoch einzuschränken. Die in den Beispielen angegebenen Teile und Prozente beziehen sich auf das Gewicht, soweit nicht anders vermerkt.

### Beispiel 1

In einem heizbaren 2l-Mehrhalskolben mit Rührwerk, Thermometer, Tropftrichter, Rückflußkühler und Einfüllrohr werden unter einer Stickstoffatmosphäre 967 g handelsübliches Kolophonium, das auch als Naturharz oder Naturharzsäure bezeichnet wird, und 48 g Maleinsäureanhydrid eine Stunde bei 160 °C erhitzt. Dann werden bei dieser Temperatur 2,5 g Lithiumhydroxid, 133 g Pentaerythrit, und 16 g Glycerin zugegeben. Sodann werden 74 g eines wäßrigen Phenol-Formaldehyd-Kondensationsprodukts (70 %ig in Wasser, Viskosität 350 mPa·s) sowie 67 g eines wäßrigen p-t-Butylphenol-Formaldehyd-Kondensationsprodukt (70 %ig in Wasser, Viskosität 250 mPa·s) innerhalb von einer Stunde zugetropft. Dabei beginnt bereits Wasser abzudestillieren. Dann wird auf 260 °C erhitzt unter ständiger Destillation von Wasser. Sobald die Säurezahl unter 35 mg KOH/g Harz gesunken ist, werden dem Ansatz 22 g 1,2,3,6-Tetrahydrophthalsäureanhydrid hinzugefügt. Man läßt noch eine Stunde nachrühren und evakuiert dann zur Entfernung flüchtiger Anteile 1,5 h bei 100 mbar. Nach Aufheben des Vakuums mit Stickstoff werden 1130 g eines spröden, pulverisierbaren Harzes mit dem Erweichungspunkt 146 °C und der Säurezahl 21 mg KOH/g Harz erhalten. Eine 25 %ige Lösung in Toluol besitzt bei 23 °C eine Viskosität von 18 mPa·s und eine 50 %-ige Lösung eine Viskosität von 2.350 mPa·s. Durch Gelpermeationschromatographie wird ein mittleres Molekulargewicht M_{w} von 98.500 ermittelt. Die Reaktionszeit zur Herstellung beträgt 11 Stunden.

### Beispiel 2

Man verfährt wie in Beispiel 1 angegeben, mit der Abänderung, daß statt 1,2,3,6-Tetrahydrophthalsäureanhydrid 16 g Bernsteinsäureanhydrid verwendet werden. Ausbeute: 1124 g; Fp.: 142 °C; Viskosität (50 %-ig in Toluol): 1.960 mPa·s; Viskosität (25 %-ig in Toluol): 14 mPa·s; M_{w}: 67.300.

### Beispiel 3

Man verfährt wie in Beispiel 1 angegeben, mit der Abänderung, daß statt 1,2,3,6-Tetrahydrophthalsäureanhydrid 16 g Adipinsäure verwendet werden. Ausbeute: 1.128 g; Fp.: 142 °C; Viskosität (50 %-ig in Toluol): 1.850 mPa·s; Viskosität (25 %-ig in Toluol): 11 mPa·s; M_{w}: 52.400.

### Beispiel 4

Man verfährt wie in Beispiel 1 angegeben, mit der Abänderung, daß statt 1,2,3,6-Tetrahydrophthalsäureanhydrid 48 g Maleopimarsäure verwendet werden. Ausbeute: 1.154 g; Fp.: 144 °C; Viskosität (50 %-ig in Toluol): 2.480 mPa·s; Viskosität (25 %-ig in Toluol): 14 mPa·s; M_{w}: 59.200.

### Beispiel 5

Man verfährt wie in Beispiel 1 angegeben, mit der Abänderung, daß statt Lithiumhydroxid 4,2 g Natriumhydroxid verwendet werden. Ausbeute: 1.124 g; Fp.: 142 °C; Viskosität (50 %-ig in Toluol): 760 mPa·s; Viskosität (25 %-ig in Toluol) 7 mPa·s; M_{w}: 24.950.

### Beispiel 6

Man verfährt wie in Beispiel 1 angegeben, mit der Abänderung, daß statt Lithiumhydroxid 25 g Zinkoxid und statt Tetrahydrophthalsäureanhydrid 80 g Maleopimarsäure verwendet werden. Ausbeute: 1.181 g; Fp.: 142 °C; Viskosität (50 %-ig in Toluol) 3.390 mPa·s; Viskosität (25 %-ig in Toluol) 7 mPa·s; M_{w}: 14.980.

### Beispiel 7

Man verfährt wie in Beispiel 1 angegeben, mit der Abänderung, daß statt Lithiumhydroxid 6,25 g Magnesiumoxid und statt Tetrahydrophthalsäureanhydrid 60 g Maleopimarsäure verwendet werden. Ausbeute: 1.165 g; Fp.: 148 °C; Viskosität (25 %-ig in Toluol): 12 mPa·s.

### Beispiel 8

Man verfährt wie in Beispiel 1 angegeben, mit der Abänderung, daß statt Lithiumhydroxid 7,7 g Calciumhydroxid und statt Tetrahydrophthalsäureanhydrid 22 g Adipinsäure verwendet werden. Ausbeute: 1.129 g; Fp.: 142 °C; Viskosität (50 %-ig in Toluol): 270 mPa·s; Viskosität (25 %-ig in Toluol): 7 mPa·s; M_{w}: 13.230.

### Beispiel 9

Man verfährt wie in Beispiel 1 angegeben, mit der Abänderung, daß statt Lithiumhydroxid 7,7 g Calciumhydroxid und 23 g 1,2,3,6-Tetrahydrophthalsäureanhydrid verwendet werden. Ausbeute: 1.131 g; Fp.: 145 °C; Viskosität (50 %-ig in Toluol): 680 mPa·s; Viskosität (25 %-ig in Toluol): 7 mPa·s; M_{w}: 15.000.

### Beispiel 10

In einem heizbaren 2l-Mehrhalskolben mit Rührwerk, Thermometer, Tropftrichter, Rückflußkühler und Einfüllrohr werden unter einer Stickstoffatmosphäre 724 g handelsübliches Kolophonium, 230 g eines handelsüblichen Kohlenwasserstoffharzes (®Escorez 8190, Hersteller Fa. Exxon) und 48 g Maleinsäureanhydrid eine Stunde bei 160 °C erhitzt. Dann werden bei dieser Temperatur 2,5 g Lithiumhydroxid, 133 g Pentaerythrit, und 16 g Glycerin zugegeben. Sodann werden 74 g eines wäßrigen Phenol-Formaldehyd-Kondensationsprodukts (70 %ig in Wasser, Viskosität 350 mPa·s) sowie 67 g eines wäßrigen p-t-Butylphenol-Formaldehyd-Kondensationsprodukt (70 %ig in Wasser, Viskosität 250 mPa·s) innerhalb von einer Stunde zugetropft. Dabei beginnt bereits Wasser abzudestillieren. Dann wird auf 260 °C erhitzt unter ständiger Destillation von Wasser. Sobald die Säurezahl unter 35 mg KOH/g Harz gesunken ist, werden dem Ansatz 10 g 1,2,3,6-Tetrahydrophthalsäureanhydrid hinzugefügt. Man läßt noch eine Stunde nachrühren und evakuiert dann zur Entfernung flüchtiger Anteile 1,5 h bei 100 mbar. Nach Aufheben des Vakuums mit Stickstoff werden 1108 g eines spröden, pulverisierbaren Harzes mit dem Erweichungspunkt 154 °C und der Säurezahl 18 mg KOH/g Harz erhalten. Eine 25 %ige Lösung in Toluol besitzt bei 23 °C eine Viskosität von 19 mPa·s. Die Reaktionszeit zur Herstellung beträgt 9 Stunden.

### Beispiel 11

In einem heizbaren 2l-Mehrhalskolben mit Rührwerk, Thermometer, Tropftrichter, Rückflußkühler und Einfüllrohr werden unter einer Stickstoffatmosphäre 965 g handelsübliches Kolophonium, 37 g Maleinsäureanhydrid und 30 g Styrol eine halbe Stunde bei 160 °C erhitzt. Dann wird während einer weiteren halben Stunde die Temperatur langsam auf 200 °C erhöht. Dann werden bei dieser Temperatur 2,5 g Lithiumhydroxid und 148 g Pentaerythrit zugegeben. Sodann werden 74 g eines wäßrigen Phenol-FormaldehydKondensationsprodukts (70 %ig in Wasser, Viskosität 350 mPa·s) sowie 67 g eines wäßrigen p-t-Butylphenol-Formaldehyd-Kondensationsprodukt (70 %ig in Wasser, Viskosität. 250 mPa·s) innerhalb von einer Stunde zugetropft. Dabei beginnt bereits Wasser abzudestillieren. Dann wird auf 260 °C erhitzt unter ständiger Destillation von Wasser. Sobald die Säurezahl unter 35 mg KOH/g Harz gesunken ist, werden dem Ansatz 22 g 1,2,3,6-Tetrahydrophthalsäureanhydrid hinzugefügt. Man läßt noch eine Stunde nachrühren und evakuiert dann zur Entfernung flüchtiger Anteile 1,5 h bei 100 mbar. Nach Aufheben des Vakuums mit Stickstoff werden 1.078 g eines spröden, pulverisierbaren Harzes mit dem Erweichungspunkt 138 °C und der Säurezahl 16 mg KOH/g Harz erhalten. Eine 25 Gew.-%ige Lösung in Toluol besitzt bei 23 °C eine Viskosität von 8 mPa·s. Die Reaktionszeit zur Herstellung beträgt 9 Stunden.

### Beispiel 12

In einem heizbaren 6l-Mehrhalskolben mit Rührwerk, Thermometer, Tropftrichter, Rückflußkühler und Einfüllrohr werden unter einer Stickstoffatmosphäre 2.428 g handelsübliches Kolophonium mit 42 g Maleinsäureanhydrid während einer halben Stunde auf 160 °C erhitzt. Die gebildete Säure wird sodann mit 40,5 g Calciumhydroxid, 214 g Glycerin, 314 g Nonylphenol, 234 g Bisphenol A und 208 g Formaldehyd zwei Stunden auf 130 °C erhitzt, wobei sich im verschlossenen Gefäß ein Druck von 1,5 bar einstellt. Dann wird drucklos gestellt und unter Abdestillation die Temperatur auf 250 °C erhöht, wobei ab 200 °C das entstehende Reaktionswasser mit Xylol azeotrop abdestilliert wird. Dann werden 200 g Maleopimarsäure hinzugegeben. Man läßt noch eine Stunde nachrühren und entfernt flüchtige Bestandteile durch zehnminütiges Evakuieren bei 100 mbar. Nach Aufheben des Vakuums mit Stickstoff werden 3.092 g eines spröden, pulverisierbaren Harzes mit dem Erweichungspunkt 134 °C und der Säurezahl 26 mg KOH/g Harz erhalten. Eine 25 Gew.-%ige Lösung in Toluol besitzt bei 23 °C eine Viskosität von 8 mPa·s und eine 50 Gew.-%ige Lösung eine Viskosität von 965 mPa·s.

### Beispiel 13

Man verfährt wie in Beispiel 1 angegeben, mit der Abänderung, daß zusätzlich zum Lithiumhydroxid 2 g Natriumhydroxid und 5 g Leinöl verwendet werden. Ausbeute: 1.157 g; Fp.: 145 °C; Viskosität (50 %ig in Toluol): 2.680 mPa·s; Viskosität (25 %ig in Toluol): 17 mPa·s; M_{w}: 115.000.

### Anwendungstechnischer Vergleich

Nach üblichen Verfahren werden jeweils aus den Bindemittelharzen des Beispiels 11 (Farbe A) und einem handelsüblichen Phenolharz-modifizierten Naturharzsäureester (Zinkgehalt, bestimmt als ZnO, 4,5 Gew.-%, Viskosität (25 %ig in Toluol) bei 23 °C 4,5 mPa·s, (Farbe B))
nach den üblichen Methoden durch Dispergieren einer Mischung von
- 24 g: Bindemittelharz
- 9 g: ®Pigment Litholrubin (Rotpigment, BASF AG)
- 67 g: Toluol

Farben für den Illustrationstiefdruck hergestellt und im Tiefdruckverfahren stark saugendes Naturpapier bedruckt.

Der Glanz der Andrucke, der für ein gutes drucktechnisches Ergebnis möglichst hoch sein sollte, wird sodann mit dem Laborreflektometer nach Lange bei einem Einstrahlwinkel von 60 ° gemessen.

Das Durchschlagen der Farben auf die Rückseite des Bedruckstoffs, das für ein gutes drucktechnisches Verhalten möglichst schwach sein sollte, wird visuell beurteilt und auf einer Notenskala von 1 bis 6 beurteilt. Dabei bedeutet 1 kein Durchschlagen auf die Rückseite des Bedruckstoffs und 6 nachteiliges maximales Durchschlagen auf die Rückseite des Bedruckstoffs.

Die mit dem erfindungsgemäßen Harz formulierte Farbe ergibt deutlich glänzendere Andrucke als die mit den Harzen des Standes der Technik formulierten Farben.

| | Farbe A | Farbe B | Farbe C |
|---|---|---|---|
| Glanz (%) | 65 | 59 | 60 |
| Durchschlagen | 2 | 3 | 2 |

Durch Dispergieren von
- 12 g: Vergleichsharz
- 6 g: Bindemittelharz des Beispiels 1
- 9 g: Litholrubin
- 73 g: Toluol
wird eine harzarme Farbe C hergestellt und mit der harzreichen Farbe B verglichen. Es wird trotz des um 25 Gew.-% reduzierten Harzanteils ein ähnlich gutes drucktechnisches Ergebnis erhalten.

## Patentansprüche

1. Toluol-lösliche modifizierte Naturharzsäureester, herstellbar durch Umsetzung von mindestens jeweils einer Verbindung aus den Substanzgruppen
A) Naturharze oder Naturharzsäuren,
B) α,β-ethylenisch ungesättigte Carbonsäuren oder deren Anhydride,
C) Phenole, die gegenüber Oxoverbindungen mehrfachfunktionell sind,
D) Aldehyde oder Aldehydacetale,
E) Alkohole mit mindestens zwei Hydroxylgruppen
sowie gegebenenfalls von weiteren Verbindungen aus den Substanzgruppen
F) Fettsäuren oder Fettsäureester,
G) ethylenisch ungesättigte Monomere,
H) ethylenisch ungesättigte Kohlenwasserstoffharze
in Gegenwart von
I) einwertigen oder zweiwertigen Metallverbindungen oder Gemischen davon bei einer Temperatur von 100 bis 300 °C unter Wasserabspaltung bis zu einer Säurezahl kleiner 100 mg KOH/ g Harz und anschließende Umsetzung der gebildeten Produkte mit
J) Carbonsäuren, die wenigstens zwei Carboxylgruppen enthalten und nicht α,β-ethylenisch ungesättigt sind, oder deren Anhydriden im Temperaturbereich von 200 bis 300 °C.

2. Modifizierte Naturharzsäureester nach Anspruch 1, dadurch gekennzeichnet, daß sie ein mittleres Molekulargewicht (Gewichtsmittel M_{w}) im Bereich zwischen 5.000 und 150.000 aufweisen.

3. Modifizierte Naturharzsäureester nach Anspruch 1, dadurch gekennzeichnet, daß 25 Gew.-%ige Lösungen der modifizierten Naturharzsäureester in Toluol bei 23 °C eine Viskosität zwischen 3 und 100 mPa·s aufweisen.

4. Verfahren zur Herstellung von Toluol-löslichen modifizierten Naturharzsäureestern durch Umsetzung von
30 bis 95 Gew.-% Naturharze oder Naturharzsäuren aus der Substanzgruppe A),
0,1 bis 20 Gew.-% α,β-ethylenisch ungesättigte Carbonsäuren oder deren Anhydride der Substanzgruppe B),
1 bis 45 Gew.-% Phenole, die gegenüber Oxoverbindungen mehrfachfunktionell sind der Substanzgruppe C),
1 bis 20 Gew.-% Aldehyde oder Aldehydacetale der Substanzgruppe D),
oder anstelle der Komponenten der Substanzgruppen C) und D) oder anteilig mit diesen aus Verbindungen der Substanzgruppen C) und D) separat hergestellte Kondensationsprodukte,
1 bis 20 Gew.-% Alkohole mit mindestens zwei Hydroxylgruppen der Substanzgruppe E),
0 bis 40 Gew.-% Fettsäuren oder Fettsäureester aus der Substanzgruppe F),
0 bis 30 Gew.-% ungesättigte Monomere der Substanzgruppe G),
0 bis 30 Gew.-% Kohlenwasserstoffharze aus der Substanzgruppe H),
in Gegenwart von
0,01 bis 5 Gew.-%, berechnet als Oxid, ein- und/oder zweiwertigen Metallverbindungen aus der Substanzgruppe I), bei einer Temperatur von 100 bis 300 °C unter Wasserabspaltung bis zu einer Säurezahl kleiner 100 mgKOH/g Harz und anschließender Umsetzung der gebildeten Produkte mit Carbonsäuren, die wenigstens zwei Carboxylgruppen enthalten und nicht α,β-ethylenisch ungesättigt sind oder deren Anhydriden aus der Substanzgruppe J) im Temperaturbereich von 200 bis 300 °C.

5. Verfahren zur Herstellung von modifizierten Naturharzsäureestern nach Anspruch 4, dadurch gekennzeichnet, daß als Metallverbindung der Substanzgruppe I) eine Lithiumverbindung verwendet wird.

6. Verfahren zur Herstellung von modifizierten Naturharzsäureestern nach Anspruch 4, dadurch gekennzeichnet, daß als Metallverbindung der Substanzgruppe I) eine Calcium-, Magnesium- oder Zinkverbindung oder ein Gemisch davon verwendet wird.

7. Verfahren zur Herstellung von modifizierten Naturharzsäureestern nach Anspruch 4, dadurch gekennzeichnet, daß als Carbonsäureanhydrid der Substanzgruppe J) 1,2,3,6-Tetrahydrophthalsäureanhydrid verwendet wird.

8. Verfahren zur Herstellung von modifizierten Naturharzsäureestern nach Anspruch 4, dadurch gekennzeichnet, daß als Metallverbindung der Substanzgruppe I) eine Lithiumverbindung und als Carbonsäureanhydrid der Substanzklasse J) 1,2,3,6-Tetrahydrophthalsäureanhydrid verwendet werden.

9. Verwendung der modifizierten Naturharzsäureester nach Anspruch 1 in Pigmentanreibungen oder Pigmentkonzentraten.

10. Verwendung der modifizierten Naturharzsäureester nach Anspruch 1 als Bindemittelharze für den Illustrationstiefdruck.
